# EUROPEAN PATENT SPECIFICATION

(11) **EP 2 512 904 B1**
(45) Date of publication and mention of the grant of the patent: **13.04.2016**
(21) Application number: 09852347.5
(22) Date of filing: 15.12.2009
(51) Int. Cl.: B62D 35/00, B60W 30/14, B60K 11/08

(54) **ARRANGEMENT AND METHOD FOR OPTIMIZING THE POSITION OF AT LEAST ONE AIR DEFLECTOR**
ANORDNUNG UND VERFAHREN ZUR OPTIMIERUNG DER POSITION VON MINDESTENS EINEM LUFTLEITBLEICH
DISPOSITIF ET PROCÉDÉ POUR OPTIMISER LA POSITION D'AU MOINS UN DÉFLECTEUR D'AIR

(43) Date of publication of application: 24.10.2012
(73) Proprietor: Volvo Lastvagnar AB, 405 08 Göteborg (SE)
(72) Inventor: TENSTAM, Anders, SE-433 51 Öjersjö (SE)
(74) Representative: Jönrup, Emil
(86) International application number: PCT/SE2009/000519
(87) International publication number: WO 2011/075009

(56) References cited:
- WO-A1-2009/096913
- US-A- 4 102 548
- US-A1- 2003 227 194
- US-A1- 2005 173 945
- US-A1- 2009 248 242

## Description

The present invention relates to a method for optimizing a position of at least one air deflector guiding an airflow around a vehicle, particularly of a truck or truck-trailer combination, during driving, wherein the position of the at least one air deflector is determined by an actuator which is controlled in response to a control signal.

Air resistance of a vehicle, particularly of a truck or a truck-trailer combination, is one of the important factors influencing fuel consumption of the vehicle, when driving at highway speed. Especially, trucks or truck-trailer combinations, where height and/or width of the driver's cab and the storage compartment or trailer differ, show a large air resistance during driving.

A common measure to reduce the air resistance of a truck or truck-trailer combination is to use air deflectors, which hide the frontal face area of the trailer from an oncoming air flow to get a more streamlined complete vehicle. Usually, there is at least one roof air deflector mounted to the roof of the driver's cab, which levels out the height difference between tractor and trailer and guides air over the vehicle. Additionally, the truck may comprise side air deflectors which are mounted to the sides of the driver's cab and guide air sideways along the vehicle.

The settings, i.e. the angular position, of the air deflectors have a significant effect on the total vehicle air resistance even for small angular variations. Therefore careful optimization of the settings is required for reducing the fuel consumption.

Currently, most trucks are equipped with tabular data for setting the air deflectors with respect to truck height, trailer height and distance between tractor and trailer. The tabular data are provided e.g. by the truck manufacturer as a manual table or can be stored in a memory. It is then up to the driver to manually adjust the deflectors according to the complete vehicle setup. Disadvantageously, the driver often neglects to adjust the air deflectors so that the air deflectors are not or wrongly adjusted, which in turn increases the driving cost, significantly.

It has therefore been suggested in the state of the art, e.g. in the Patent Application US 2005/0173945, to store the air deflector settings in a memory and to interrogate the geometrical data of truck and trailer from the driver by a human machine interface. Thereby, the method ensures that a driver does not neglect the adjustment of the air deflectors. As soon as the geometrical data are identified, the method reads out the corresponding setting for the air deflectors from the tabular stored in the memory and adjusts the air deflectors in accordance. The settings are predetermined for a plurality of different truck-trailer combination possibilities.

Even if this system reduces the possibility that a driver neglects or forgets to adjust the positions of the air deflectors, considerations concerning driving conditions such as wind directions or relative speed between truck and air cannot be taken into account. Therefore, an optimal setting of the air deflectors is still not obtained. Additionally, if the driver interrogation procedure takes place during driving, the driver is distracted from his primary driving tasks, which interferes with safety aspects.

It has been also suggested in the state of the art, e.g. the US Patent US 4,102,548, to adjust the air deflector during driving. In this document it has been disclosed to optimize the position of the deflector in relation to a so-called vehicle performance signal, which is related to a speed signal divided by a fuel consumption signal. The adjustment of the air deflector can be performed manually or automatically.

Disadvantageously, the method uses fuel consumption and speed as basis information for the determination of the air deflector settings. Both signals are not accurate enough for allowing an optimization of the air deflector settings. The fuel consumption signal, for example, varies strongly with the road geometries. E.g. if the road is inclined longitudinally and/or laterally, or if there are bumps on the road, the fuel consumption signal is affected. For providing a suitable signal, the driver needs to do a careful estimation on the road geometries, which is almost impossible and additionally might also defer the driver's attention from his driving tasks.

US 2009/0248242 describes a method for adjusting air deflectors on a vehicle when the driver maintains a predetermined speed. The same applies for the speed signal. A driver trying to keep, the speed of the vehicle as constant as possible, needs to refer to the speedometer for detecting any changes in the speed of the vehicle. But, usually the speedometer shows only a graduation of 10 to 20 km/h which is not precise enough to judge, whether the speed is constant or not. Additionally, the response time of the speedometer is too slow and the adjustment possibilities of the accelerator pedal are not precise enough to allow an accurate speed control by the driver.

Therefore, the settings of the air deflectors obtained with the known methods are only estimations and approximations of optimal air deflector settings. This in turn results in still too high fuel consumption and therefore in high driving costs.

A further main disadvantage of the known methods is that the interrogation procedure or the manual adjustment of the air deflectors and the constant checking of speed and road geometries can cause a severe driver distraction, which ultimately might compromise safety.

It is therefore an object of the present invention to provide a method for optimizing the position of an air deflector with minimal driver distraction.

This object is solved by a method according to claim 1.

According to one aspect of the invention, it is suggested by the inventor to use a vehicle driving control system for controlling the speed of the vehicle during the optimization procedure. The constant speed can be preferably kept by providing a constant throttle position, which may be secured by a special air deflector optimization mode of the vehicle driving control system. This has the advantage that the driver does not need to control the speed during the optimization procedure any more, which increases safety and the accuracy of the optimization procedure.

Preferably, the method is adapted to automatically initiate an optimization procedure, if the preview information indicates suitable road conditions. Advantageously, the automatic adjustment of the air deflectors enables the driver to remain concentrated on the traffic situation. Therefore, safety is not compromised by a driver concentrating on the optimal adjustment of the air deflectors or inputting data during an interrogation procedure.

Since, preferably, the inventive method is adapted to keep the vehicle at constant speed and to initiate the optimization procedure, only if the conditions are suitable, the invention enables optimized settings of the air deflectors. Further, as the optimization procedure is performed during driving also wind direction relative to the vehicle and a relative speed between wind and vehicle can be taken into account. Thereby, it is ensured that the optimization procedure is not interrupted or leads to wrongly adjusted deflectors due to an inaccurate signal.

Further advantages and preferred embodiments are disclosed in the description, the claims and the Figures.

In the following, a preferred embodiment of the inventive method will be discussed with help of the attached Figures. The description thereof is considered as exemplification of the principles of the invention and is not intended to limit the scope of the claims.

The Figures show:
- Figure 1:: a schematic flow diagram illustrating the steps of a preferred embodiment of the inventive method; and
- Figure 2:: a diagram illustrating graphically the method described in Fig. 1.

Usually, a truck comprises a driver's cab and a storage compartment, particularly a trailer, wherein between the driver's cab and the trailer a space remains. The height and/or width of trailer and driver's cab may differ so that the air dynamic properties of a truck or a truck-trailer combination are not optimal. For reducing the air resistance of the vehicle and to save fuel there are roof and side deflectors mounted on the driver's cab for hiding the frontal face area of the trailer from an oncoming airflow and to get a more streamlined complete vehicle. The factors that may affect the air resistance are mainly wind direction and wind speed in relation to the vehicle and the geometrical factors, namely height and width of the driver's cab relative to the height and width of the trailer as well as the distance between tractor and trailer. Thereby, even small angular variations in the settings of the deflectors may have significant effect on the total vehicle air resistance.

According to a preferred embodiment of the invention each deflector is equipped with an actuator that can automatically adjust the settings of the air deflector and a sensor to determine the absolute angular orientation of the air deflector. The actuator may be an electrical, pneumatic or hydraulic actuator and is preferably adapted to be controlled individually for each air deflector.

The optimization of the individual deflectors is preferably performed during driving and under controlled and known conditions so that the minimum air resistance can be determined. According to the invention these known and controlled conditions can be provided by using a vehicle driving control system which is adapted to control at least the speed of the vehicle and to sense driving characteristics being related to information on the air resistance. Such driving characteristics are for example fuel consumption or fuel rate, vehicle speed, engine speed, engine torque, engine power or engine throttle position.

In addition to the known and controlled conditions, it is prefered to ensure that the optimization procedure is not interrupted and not distorted by road conditions which are not suitable for an optimization procedure. Such road conditions can be e.g. an inclined or curved road which directly affects the fuel consumption of the vehicle or requires speed variations.

Therefore, the inventive arrangement comprises a detecting device such as a GPS system or a navigation system which detects road or road sections suitable for the optimization procedure, i.e. straight and flat road sections.

During the optimization procedure each deflector is swept through an interval of setting angles and the corresponding variation in the response signal indicating the air resistance is recorded. Such signals can be e.g. the fuel consumption signal or in general the response dynamic of the cruise control system. That means since the cruise control controls the engine so that the vehicle is kept at constant speed, the air resistance variation due to the different settings can be deduced from the variation in the control of the cruise control system.

Nevertheless, the variations in the response signal do not necessarily originate from variations in the air resistance alone. Also other factors, e.g. ambient conditions, can generate variations in the response signal. For example, bumps in the road can impose rapidly varying disturbances on the fuel consumption signal. Therefore, the inventive system may further comprise one of or a combination of the following help systems:
1. sensors which detect variations originating from other ambient conditions than air resistance. Dependent on these additional information, the response signal is "cleaned" from these variations and the air deflector settings are optimized in response to the variation in the "cleaned" signal.
2. The vehicle control system, e.g. an engine control system of the cruise control, is engaged in a dedicated air-deflector-adjustment mode, in which rapidly varying response signals e.g. the fuel rate, are suppressed and will hence not react on disturbance factors like short wind gusts or bumps in the road. Preferably, this can be accomplished by modulating the time constants of the fuel rate control regulator mechanism, so that it reacts to "slower" changes only.

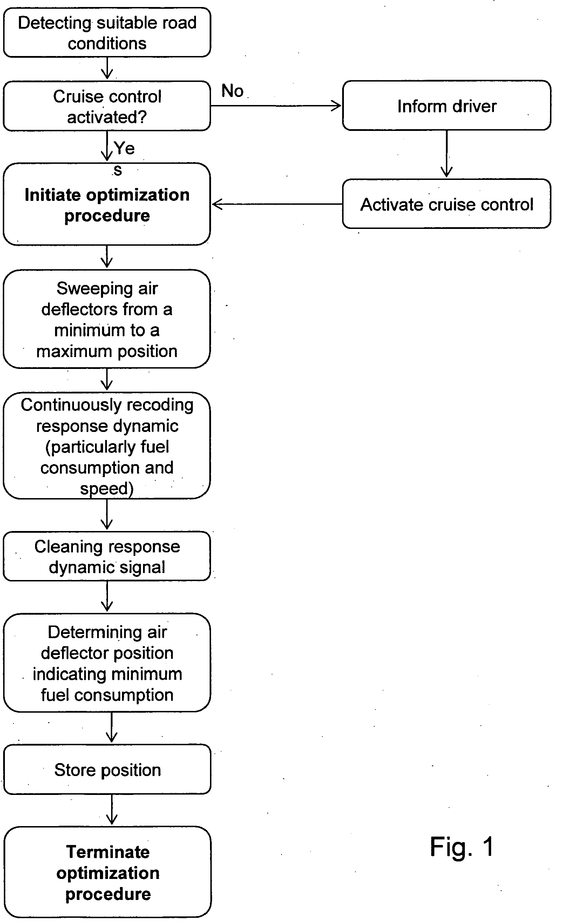

In the following, the steps of a preferred embodiment of the inventive method are described in relation to the flow diagram shown in Fig. 1.

In a first step of the inventive method the detecting device indicates road conditions which are suitable for an optimization procedure. As soon as the detecting device indicates suitable road conditions, the inventive arrangement checks whether a vehicle driving control system, particularly a cruise control system is activated. In case the vehicle driving control system is activated, the optimization procedure is automatically initialized.

Preferably, the optimization procedure is also only initialized, if a given predetermined time has elapsed since the last optimization, or a significant compass change of driving direction has been detected, by e.g. a navigation system, which in turn may indicate a new side wind condition. This will ensure that the optimization procedure is not run whenever suitable road conditions prevail, but only at certain intervals, e.g. every 15 to 60 minutes, or if a new driving situation requires an optimization.

Preferably, the vehicle driving control system controls the speed of the vehicle to be constant. However, it should be noted that constant in this context means within a range of some km/h, e.g. ± 2 km/h. This range is necessary in order to eliminate too large fluctuation in the fuel signal, as explained above. For this reason, the exact vehicle speed must be recorded and the fuel rate signal to be optimized is not the pure fuel consumption (in e.g. g/s) but rather a signal normalized with the velocity squared.

In case the cruise control system is not activated, a driver of the truck is informed by means of a human machine interface that conditions suitable for optimizing the air deflector are detected. Then, the driver can either initiate the optimization procedure manually, whereby the speed of the vehicle is controlled or monitored by the vehicle driving control system or he can activate the cruise control system so that the optimization procedure can be started automatically.

As soon as the optimization procedure is initialized the air deflectors are swept through an interval of setting angles until the optimal position of the air deflectors and thereby the minimal air resistance of the vehicle are reached. Thereby, the deflectors can be controlled individually in parallel or in series.

In the following, an exemplary embodiment for a global optimization procedure and an exemplary embodiment for a local optimization procedure will be described. Even if, some of the possibilities to sweep the air deflectors through the interval of setting angles are described below, It goes without saying that any other variation procedure can be used and is encompassed by the scope of the invention.

In a first step of the illustrated preferred embodiment of the "global" optimization procedure, the angular positions of the deflectors are varied from a minimal angular position to a maximal angular position. Simultaneously, the response dynamic e.g. the fuel consumption variation and/or speed variation, is sensed. This sensed signal is continuously "cleaned" from variations not originating from the air resistance, by using additional information obtained from sensors sensing ambient conditions or by directly suppressing rapid fluctuations in the fuel rate control loop. Using this procedure, the deflectors are continuously swept through the possible angular positions at a fairly slow pace, e.g. from minimum to maximum deflection position in 30 seconds, and the fuel rate information normalized by the velocity squared, is sampled at e.g. every 0.1 s together with information about deflector position.

In a subsequent step the system determines at which air deflector position angle the lowest normalized fuel rate (fuel rate divided by vehicle speed squared) was obtained. This is the sought optimum position for the air deflectors to which they are moved by corresponding control of the actuators

With other words, the position of the air deflectors is optimized by sweeping the air deflector through an interval of angular settings and recording the variations in the response signal. After having swept the air deflectors through the interval, the variations are evaluated and the optimal position is detected. Thereby, the optimal position is detected when the response signal indicates a minimum air resistance. Then the air deflector is moved to this determined position and the optimizations procedure is terminated.

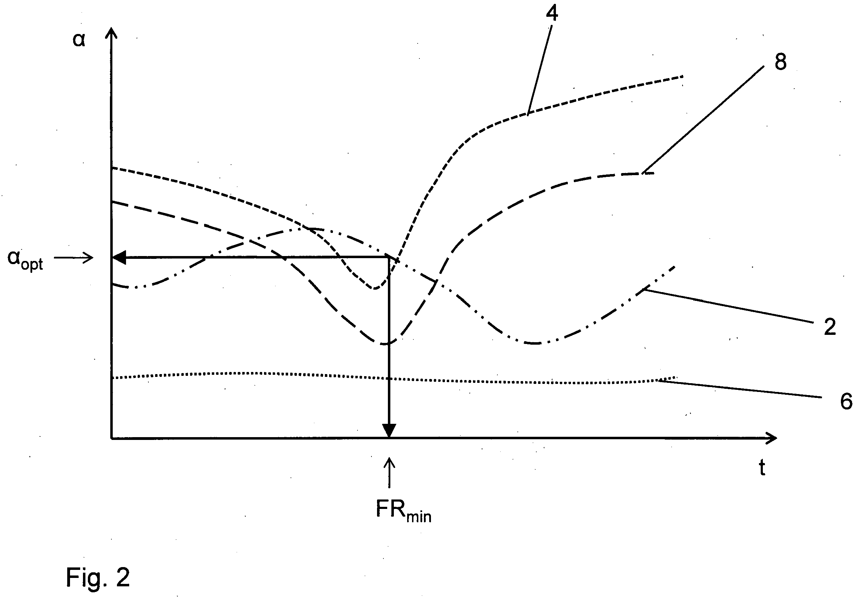

Fig. 2 shows graphically the above described optimization procedure. On the x-axis of the diagram the time t is indicated, wherein on the y-axis the angular position α of the air deflector is recorded. The movement of the air deflector is illustrated by graph 2, which indicates that the air deflector is raised from its current position to a maximal angular position and subsequently lowered to a minimal position.

Additionally, the diagram shows the simultaneously recorded fuel rate signal (graph 4) and the vehicle speed (graph 6). The fuel rate is normalized by dividing the recorded fuel rate by the squared vehicle velocity for providing an informative fuel rate signal (graph 8).

As can be seen from the graph 8, the normalized fuel rate shows a significant minimum (FRₘᵢₙ) for a certain position of the air deflector. This minimum indicates the optimal position (αₒₚₜ) for the air deflector, to which the air deflector is finally moved.

Instead of a continuous sweep though the angular position it is also possible to use a step-by-step optimization procedure, where the air deflectors positions are stepwise varied until no further reduction in the fuel rate signal is detected.

The step-by-step approach has the advantage that it is not necessary to sweep the air deflectors through the full range of setting angles, but to increment a current position slightly until a minimum is located. This "so-called" local optimization is preferably used if a near-optimum position is already found. For example, after having changed a trailer, the air deflectors are swept through the full range of setting angles for adapting the air deflectors to the new geometric conditions (global optimization). Thereby, the near-optimal position of the air deflectors is provided. For the subsequently performed optimizations procedures (after elapse of a certain time period and/or a significant change in driving direction), the current position is only slightly varied by using the local step-by-step optimization procedure.

It should be further noted that the step-by-step approach must not necessarily be performed as discrete steps with interruptions in between, but can also be performed as continuous sweep, since the response signal usually is fast enough for an immediate response to a change. Therefore, a reduction in air resistance can be detected more or less in real time.

In the first step of such a local optimization procedure, the current angular positions of the deflectors may be increased. In a next step, or more or less simultaneously, the response dynamic e.g. the fuel consumption variation or speed variation, is sensed. This sensed signal is then "cleaned" from variations not originating from the air resistance, by using additional information obtained from sensors sensing ambient conditions. In a next step, the position of the air deflector(s) is maintained or the air deflector returns to its previous position depending on whether the "cleaned" response signal indicates a reduced air resistance.

In case a reduced air resistance is detected, the position of the air deflector is maintained and a flag indicating an amendment of the positions is set. Then the system is controlled to repeat the increasing steps in order to detect the optimal settings.

This repetition is performed until no further air resistance reduction is detected. In case no further air resistance reduction is detected, the last position showing a decrease of the air resistance is maintained and the optimization procedure is terminated.

In case, after increasing the position the first time, the response signal indicates that the air resistance has increased, the air deflector is directly returned to its previous position. In this case no flag is set which would indicate that an amendment of the position has taken place. This ensures that the optimization procedure is not terminated, but the system is controlled to decrease the angular position of the air deflector in order to detect whether a decrease might result in a reduced air resistance.

The decreasing steps are performed analogously to the increasing steps as described above. In case the decrease of the angular position of the air deflector indicates a reduced air resistance, the decrease procedure is iterated until no further reduction of the air resistance is detected. Then, the air deflector returns to its last stored position and the optimization procedure is terminated. It goes without saying that it is also possible to start with the decreasing steps followed by the increasing steps.

It goes without saying that the above described "local" optimization procedure can also be used for a full range sweep and the above described "global" optimization procedure can be adapted so that the current position of the air deflector is only slightly varied.

As mentioned above, the air deflectors can be adjusted in parallel or in series. If the air deflectors are optimized in parallel, it is also possible to predefine, e.g. by a design experiments methodology, which could be performed by the manufacturer, discrete combinations of roof and side air deflector angles. During the optimization procedure, the roof and side air deflectors are then set to discrete, predefined combinations of setting angles, and the optimum combination is retrieved from an on-board analysis of the response functions.

Beside the possibility to decrease the air resistance of the vehicle, there are also applications possible, where an increased air resistance is desirable. Such a deliberate increase is for example advantageous, if the air deflectors should be used as "air brakes" for assisting the vehicles brakes during e.g. a long-term downhill drive. Thereby, the wear of the foundation brakes can be reduced.

For this application, the detection unit, e.g. the navigation system is adapted to detect an oncoming downhill drive. Upon detection of a downhill drive, the vehicle driving control system monitors the velocity and the braking behavior of the vehicle. Usually, a driver runs downhill by choosing a low gear and rolls downhill with a fully applied engine break. Only if the engine break is not sufficient, the foundation brakes are applied. This breaking behavior prevents the foundation brakes from excessive use and wear.

Preferably, the wear of the foundation brakes can be further reduced, if the air deflectors are moved to a position having a high air resistance upon detection of an increasing velocity even by a fully applied engine brake. The increased air resistance might often be sufficient to slow the vehicle enough so that the foundation brakes need not be used. Advantageously, during the optimization procedure, particularly during the global optimization procedure, the position of highest air resistance has already been detected. Therefore, the air deflectors can be moved to the optimal "air-brake"-position without delay.

As soon as the vehicle driving control system and/or the navigation system detects that the vehicle is no longer running downhill or the inclination of the downhill drive has decreased so far that a sole application of the engine brake is sufficient, the air deflectors are moved to their previous position of reduced air resistance.

Since the invention takes into account all relevant factors, particularly factors such as wind direction and relative speed between truck and air, and not only the difference between the height of the driver's cab and the height of the trailer, the settings can be further optimized. Additionally, since the optimization procedure is initiated automatically or the driver is informed of road conditions suitable for an optimization procedure, the potential problem of the driver neglecting to adjust the deflectors and thus driving with a disadvantageous setting is avoided.

An additional advantage of the inventive method is that optimum air deflector settings are ensured even for transport vehicles, which do not have predefined geometrical properties, e.g. timber transports, car transports or container cargo transports. These transport vehicles used to drive without adjusted air deflectors as predefined settings were not available.

By using the inventive method, the fuel consumptions can be lowered significantly even compared to the known methods. When compared with the case when the driver neglects adjusting the deflectors all together, e.g. when changing to a trailer of different height, the fuel saving potential is significantly higher. Advantageously, the use of preview information regarding suitable road conditions decrease the number of interrupted optimizations and increases the benefits of the system.

## Claims

1. Method for optimizing a position of at least one air deflector guiding an airflow around a vehicle, particularly a truck or truck-trailer combination, during driving, wherein the position of the at least one air deflector is determined by an actuator which is controlled in response to a control signal, said method comprising the steps of:
- Controlling the speed of the vehicle by means of a vehicle driving control system for providing a constant speed of the vehicle during the optimization;
- Sensing the control signal indicating the air resistance of the vehicle,
- Varying the position of the at least one air deflector until the control signal indicates a minimized air resistance of the vehicle.

2. Method according to claim 1, further comprising the step of detecting road conditions suitable for optimizing the position of the at least one air deflector.

3. Method according to claim 2, further comprising the step of: Initializing, preferably automatically, the optimization upon detection of suitable road conditions, particularly on the detection of a sufficiently straight and/or flat road or road section.

4. Method according to any one of claims 1 to 3, further comprising the step of repeating the optimization procedure upon elapse of a predetermined time period and/or detection of a significant change in driving direction, wherein preferably the position of the at least one air deflector is varied around a current position.

5. Method according to any one of claims 1 to 4, wherein the control signal is a response signal of the vehicle driving control system comprising information on variations in at least one of the group of: fuel consumption, vehicle speed, engine speed, engine power, engine throttle position, and wherein the response signal is "cleaned" from variations originating from other ambient conditions than air resistance, preferably by ignoring short-term variations in the response signal and/or providing additional information on ambient conditions by means of sensor units.

6. Method according to any one of claims 1 to 5, further comprising the step of informing the driver of suitable road conditions for optimizing the position of the at least one air deflector upon the detection of suitable road conditions.

7. Method according to claim 1, further comprising the step of inviting the driver to manually initialize the optimization and/or to launch a vehicle driving control system so that an optimization can be automatically initialized.

## Patentansprüche

1. Verfahren zur Optimierung einer Position wenigstens einer Luftleiteinrichtung, die während des Fahrens einen Luftstrom um ein Fahrzeug, insbesondere einen Lastwagen oder eine Lastwagen-Anhänger-Kombination, herum leitet, wobei die Position der wenigstens einen Luftleiteinrichtung durch ein Stellglied bestimmt wird, das in Ansprechung auf ein Steuersignal gesteuert wird, wobei das Verfahren die Schritte umfasst,
- dass die Geschwindigkeit des Fahrzeugs mittels eines Fahrzeugfahrsteuersystems zur Bereitstellung einer konstanten Geschwindigkeit des Fahrzeugs während der Optimierung gesteuert wird;
- dass das Steuersignal, das den Luftwiderstand des Fahrzeugs anzeigt, erfasst wi rd,
- dass die Position der wenigstens einen Luftleiteinrichtung variiert wird, bis das Steuersignal einen minimierten Luftwiderstand des Fahrzeugs anzeigt.

2. Verfahren nach Anspruch 1, das weiterhin den Schritt umfasst, dass Straßenzustände erfasst werden, die für die Optimierung der Position der wenigstens einen Luftleiteinrichtung geeignet sind.

3. Verfahren nach Anspruch 2, das weiterhin den Schritt umfasst, dass die Optimierung nach Erfassung geeigneter Straßenzustände, insbesondere nach der Erfassung einer(s) ausreichend geraden und/oder flachen Straße oder Straßenabschnitts, bevorzugt automatisch, initialisiert wird.

4. Verfahren nach irgendeinem der Ansprüche 1 bis 3, das weiterhin den Schritt umfasst, dass die Optimierungsprozedur nach Verstreichen eines vorherbestimmten Zeitraums und/oder Erfassung einer signifikanten Änderung der Fahrrichtung wiederholt wird, wobei vorzugsweise die Position der wenigstens einen Luftleiteinrichtung um eine gegenwärtige Position herum variiert wird.

5. Verfahren nach irgendeinem der Ansprüche 1 bis 4, wobei das Steuersignal ein Antwortsignal des Fahrzeugfahrsteuersystems ist, das Informationen über Veränderungen bei wenigstens einem aus der Gruppe von Kraftstoffverbrauch, Fahrzeuggeschwindigkeit, Motorgeschwindigkeit, Motorleistung und Motordrosselposition umfasst, und wobei das Antwortsignal von Veränderungen, die von anderen Umgebungsbedingungen als dem Luftwiderstand stammen, vorzugsweise durch Ignorieren von kurzzeitigen Veränderungen des Antwortsignals und/oder Bereitstellen zusätzlicher Informationen über Umgebungsbedingungen mittels Sensoreinheiten, "gereinigt" wird.

6. Verfahren nach irgendeinem der Ansprüche 1 bis 5, das weiterhin den Schritt umfasst, dass nach der Erfassung geeigneter Straßenzustände der Fahrer über für die Optimierung der Position der wenigstens einen Luftleiteinrichtung geeignete Straßenzustände informiert wird.

7. Verfahren nach Anspruch 1, das weiterhin den Schritt umfasst, dass der Fahrer aufgefordert wird, die Optimierung manuell zu initialisieren und/oder ein Fahrzeugfahrsteuersystem zu starten, so dass eine Optimierung automatisch initialisiert werden kann.

## Revendications

1. Procédé pour optimiser une position d'au moins un déflecteur d'air guidant un flux d'air autour d'un véhicule, en particulier un camion ou une combinaison camion-remorque, pendant la conduite, où la position de l'au moins un déflecteur d'air est déterminée par un actionneur qui est commandé en réponse à un signal de commande, ledit procédé comprenant les étapes qui consistent :
- à commander la vitesse du véhicule au moyen d'un système de commande de conduite de véhicule pour assurer une vitesse constante du véhicule pendant l'optimisation ;
- à détecter le signal de commande indiquant la résistance à l'air du véhicule,
- à faire varier la position de l'au moins un déflecteur d'air jusqu'à ce que le signal de commande indique une résistance à l'air minimisée du véhicule.

2. Procédé selon la revendication 1, comprenant en outre l'étape qui consiste à détecter des conditions routières appropriées pour optimiser la position de l'au moins un déflecteur d'air.

3. Procédé selon la revendication 2, comprenant en outre l'étape qui consiste : à initialiser, de préférence automatiquement, l'optimisation lors de la détection de conditions routières appropriées, en particulier lors de la détection d'une route ou d'un tronçon de route suffisamment droit(e) et/ou plat(e).

4. Procédé selon l'une quelconque des revendications 1 à 3, comprenant en outre l'étape qui consiste à répéter la procédure d'optimisation après écoulement d'une période prédéterminée et/ou détection d'un changement significatif de la direction de conduite, où, de préférence la position de l'au moins un déflecteur d'air varie autour d'une position actuelle.

5. Procédé selon l'une quelconque des revendications 1 à 4, dans lequel le signal de commande est un signal de réponse du système de commande de conduite de véhicule comprenant des informations sur des variations d'au moins l'un(e) du groupe constitué : de la consommation de carburant, de la vitesse du véhicule, du régime du moteur, de la puissance du moteur, de la position de papillon des gaz du moteur, et dans lequel le signal de réponse est « nettoyé » des variations provenant d'autres conditions ambiantes que la résistance à l'air, de préférence en ignorant les variations à court terme du signal de réponse et/ou en fournissant des informations supplémentaires sur des conditions ambiantes au moyen d'unités de détection.

6. Procédé selon l'une quelconque des revendications 1 à 5, comprenant en outre l'étape qui consiste à informer le conducteur de conditions routières appropriées pour optimiser la position de l'au moins un déflecteur d'air lors de la détection de conditions routières appropriées.

7. Procédé selon la revendication 1, comprenant en outre l'étape qui consiste à inviter le conducteur à initialiser manuellement l'optimisation et/ou à lancer un système de commande de conduite de véhicule de sorte qu'une optimisation puisse être automatiquement initialisée.
